# EUROPEAN PATENT APPLICATION

(11) **EP 4 520 555 A1**
(43) Date of publication of application: **12.03.2025**
(21) Application number: 23196286.1
(22) Date of filing: 08.09.2023
(51) Int. Cl.: B60D 1/62, H04L 69/40, H04W 4/44, H04W 4/46

(54) **A COMMUNICATION SYSTEM**

(71) Applicant: KNORR-BREMSE Systeme für Nutzfahrzeuge GmbH, 80809 München (DE)
(72) Inventor: ZÖLDHEGYI, Valter, 2049 Diósd (HU); NEMETH, Huba, 1116 Budapest (HU); LEITNER, Frank, 80801 München (DE); DUDAS, Zsolt, 6728 Szeged (HU); SZÖLLOSI, Adam, 1119 Budapest (HU); BATAI, Andras, 7623 Pecs (HU); KOMLÓS, Tamás, 6448 Csávoly (HU); MERZA, Valér, 2000 Szentendre (HU)

(57) **Abstract**

A communication system (100) for a trailer (10) is disclosed. The communication system (100) comprises: a first controller (110) and a second controller (120) for controlling one or more loads (400) of the trailer (10), a first communication channel (210) for providing a communication line between the first controller (110) and the towing vehicle (20), a second communication channel (220) for providing a communication line between the second controller (120) and the towing vehicle (20); and an internal communication link (300) connecting the first controller (110) and the second controller (120) to exchange information with each other, wherein the first communication channel (210) and the second communication channel (220) are configured to provide independent communication to the first controller (110) and to the second controller (120) from the towing vehicle (20).

## Description

The present invention relates to a communication system for a trailer, the trailer being configured to be towed by a towing vehicle, in particular to a redundant functional architecture of a highly autonomous driving (HAD) trailer.

The latest electrification and mobility technologies have accelerated the development and change in vehicle system architectures. Trailers supporting highly autonomous functions must have very high system availability to complete the mission even if an individual component fails. To achieve highly autonomous functions, a fault tolerant redundant trailer architecture is required.

For example, US 20220314950 A1 discloses an electromechanical brake system of a vehicle, wherein the power supply units of all axles are redundant power supply structures and the braking performance is maintained even if one part of the power supply network fails.

However, the above-mentioned redundant power supply system is limited to a conventional vehicle, and is not specifying any relationship between a towing vehicle and a trailer.

Known systems are not able or barley able to establish reliable and fail-safe communication between a towing vehicle and a trailer by using a redundant communication system.

Therefore, in order to overcome the shortcomings of the prior art, there is an urgent need in the art for a fail-safe communication system for a redundant trailer electrical/electronic (E/E) architecture for autonomous operation.

There is a demand for a communication system for a towing vehicle-trailer combination which is able to provide a centralized trailer architecture with redundant communication system between the towing vehicle and the trailer.

At least some of the problems as described before are overcome by a communication system of claim 1, or a method according to claim 14. The dependent claims refer to further advantageous realizations of the subject matter of the independent claims.

The present invention relates to a communication system for a trailer, the trailer being configured to be towed by a towing vehicle.

The communication system comprises: a first controller and a second controller for controlling one or more loads of the trailer, a first communication channel for providing a communication line between the first controller and the towing vehicle, a second communication channel for providing a communication line between the second controller and the towing vehicle, and an internal communication link connecting the first controller and the second controller to exchange information with each other.

The first communication channel and the second communication channel are further configured to provide independent communication to the first controller and to the second controller from the towing vehicle.

According to embodiments the first and second controller may be connected by only one communication link or by multiple communication links. Multiple communication links, which may be physically separated, provide the advantage that a redundant communication is made possible and increase thus the safety.

In is understood that there can be more than two controllers, or more than two communication channels. For example, the number of the controllers may correspond to the number of communication channels. In other embodiments, the number of the controllers can be different from the number of communication channels.

In addition, the one or more loads controlled by the controllers can be different or same loads, i.e. one load can be controlled by different controllers, e.g. as backup. It is understood that the load is a device hosting a function. For example, the controllers are domain electronic controllers. In an embodiment, the one or more loads controlled by the controllers include that at least one communication line is provided between the one or more loads and the controllers.

The first controller and the second controller can be interchangeable. The first controller can be used instead of the second controller and vice versa. The same applies to any two controllers when there are more than two controllers.

In is understood that the controllers independently communicate to the towing vehicle through communication channels. For example, the communication channels are independent of each another, the communication channels are not connected to each other, the second communication channel does not influence the first communication channel, and the first communication channel is not subject to control by the second communication channel and vice versa. In addition, if one communication channel fails, the other communication channel remain intact. Likewise, if one controller fails the other controller remain intact.

The same applies to any two communication channels when there are more than two communication channels. For example, in the situation when one of the communication channel fails, the other communication channel remains intact.

For example, at least two controllers share one internal communication link within the trailer for interlink communication between the controllers. In other embodiments at least two controllers share one or more internal communication links. Therefore, at least two controllers have a pairwise independent internal communication channel connected via the internal communication link(s).

It is understood that the towing vehicle or the trailer is not part of the claimed communication system. The communication system is, however, mountable on the trailer.

Optionally, the one or more loads may comprise a safety critical load to perform safety critical functions and non-safety critical loads to perform non-safety critical functions. The first controller and the second controller may be configured to control the same safety critical load and different loads from the non-safety critical loads. The first controller and the second controller may also be configured to control same safety critical load and same loads from the non-safety critical loads. The first controller and the second controller may also be configured to control different safety critical loads and different loads from the non-safety critical loads. Therefore, embodiments relate also to a HAD (highly autonomous driving) trailer architecture, which hosts non-safety critical functions (like telematics) and safety critical functions (like brake control). To have fail operational function, at least two independent devices and two controllers are present. This architecture might not have a device which has multiple connection to different controllers, so therefore a device cannot be controlled by multiple controllers. Also this option is covered by embodiments.

In other embodiments, the controllers are configured to control the safety critical load and the non-safety critical loads, for example by providing at least one communication line between the safety critical load and the controllers and/or at least one communication line between the non-safety critical loads and the controllers.

For example, the safety critical load can perform a safety critical function such as braking the trailer or braking the towing vehicle-trailer combination. For example, the non-safety critical loads can perform a non-safety critical function such as environment sensor fusion or telematics, for which no dedicated device may be present, and which may be performed on a microcontroller safety core in a domain controller. Many safety critical functions will be accompanied with dedicated controllers for this purpose.

Safety critical loads performing safety-relevant functions are hosted on every controller, and the result of the computations of the safety critical functions are crosschecked between the controllers using the internal communication link between the controllers.

Optionally, the communication system may further comprise one or more hardware accelerators adapted to accelerate the processing speed of the first controller and/or the second controller.

Optionally, the communication system may further comprise a gateway connected to the first controller and/or to the second controller, adapted to exchange information between the towing vehicle and the first controller and/or the second controller.

For example, the first controller and/or the second controller may be configured to detect defects in the first controller and/or in the second controller.

For example, the controllers may be connected to each other, and one controller can gateway the messages from the towing vehicle to other controllers and vice versa.

In addition, the one or more hardware accelerators can be designed to perform a specific function of the controllers (e.g. to control the safety-critical load) more efficiently when compared to perform a general function (e.g. to control the non-safety critical loads).

For example, the first controller may be configured as a primary domain controller and the second controller may be configured as a redundant domain controller. The domain controllers may be domain electronic controllers.

Optionally, the information that is exchanged via the internal communication link includes at least one of the following:
- status information about the first controller and/or the second controller;
- status information about the first communication channel and/or the second communication channel;
- status information about the first power supply channel and/or the second power supply channel;
- status information about the one or more loads;
- status information about the one or more hardware accelerators;
- status information about the gateway;
- other information.

For example, the information may be indicative of an occurring defect in the operation of the communication system to the first controller. For example, the information may also be indicative of the correct operation of the communication system to the first controller. The status information may indicate any defect or malfunctioning of the controller(s).

For example, the one or more hardware accelerators may be included or integrated in the first controller. Likewise, the gateway may also be included or integrated in the first controller.

In other embodiment, the gateway may route or direct the information to the correct recipient in case there are more than two controllers are present in the communication system. For example, the gateway can be configured to wirelessly communicate data between towing vehicle and the controllers (e.g. domain controllers).

For example, at least one of the controllers has a built-in gateway functionality to forward the information from the towing vehicle to other controller(s), functional control units, and one or more loads on the trailer and vice versa.

Besides that, the controllers may differ in hardware from each other based on the functional domain(s) they host (e.g. safety-critical load or non-safety critical loads). The controllers are not limited to host only one functional domain or loads (e.g. braking), they can host multiple functional domains or loads (e.g. braking, levelling, lighting, environment object fusion, telematics).

The controllers are connected to each other, and one controller can gateway the information from the towing vehicle to other controllers and vice versa.

Optionally, the one or more hardware accelerators include a high-level information processing accelerator and low-level information processing accelerators to accelerate the first controller and/or the second controller at a different level.

For example, the first controller and/or the second controller may be configured to operate with the same or different hardware accelerators based on the information that is exchanged via the internal communication link.

Optionally, the information that is exchanged via the internal communication link with one or more hardware accelerators may be image data and/or point cloud data. The first controller may process the exchanged information faster than the second controller.

Optionally, the one or more hardware accelerators may be configured to process image data and/or point cloud data and include at least one of the following: an image signal processor ISP, a graphics processing unit GPU, a neural network NN accelerator, a digital signal processor DSP. Other hardware accelerator can be used as well for processing other computing tasks.

Optionally, the one or more loads can be any of the following devices: an electronic brake control device, a levelling control device, a light control device, or any other type of power consuming device of the trailer.

The other type of power consuming device of the trailer can be for example sensor devices, navigation devices, autonomous control unit, steering system, etc.

Braking control, levelling control, or light control functions may be examples for safety relevant functions performed by the safety-critical loads. Telematics, image processing, point cloud processing may be one of the non-safety critical functions performed by the non-safety critical loads. As for the safety relevant leveling control, embodiments ensures that it is working fail operational. Therefore, if one of the level controllers fails, the other shall still maintain the function.

Optionally, the communication system may further comprise a first power supply channel for supplying power to the first controller from the towing vehicle via a first power supply terminal. Optionally, the communication system may further comprise a second power supply channel for supplying power to the second controller from the towing vehicle via a second power supply terminal.

For example, the first power supply channel and the second power supply channel may be configured to provide independent power supply to the first controller and to the second controller from the towing vehicle.

It is understood that there can be more than two power supply channels and more than two power supply terminals. For example, the number of the power supply channels may correspond to the number of the controllers. In other embodiments, the number of the power supply channels can be different from the number of controllers.

Likewise, the number of power supply terminals may correspond to the number of controllers and/or the number of communication channels. In other embodiments the number of power supply terminals may be different from the number of controllers and/or the number of communication channels.

Optionally, the communication system may comprise a network of communication channels configured to enable a communication between the towing vehicle the trailer. For example, the first communication channel and the second communication channel may be any two communication channels within the network of communication channels,

Optionally, the communication system may comprise a network of controllers being interconnected by the network of internal communication links. For example, the first controller and the second controller may be any two controllers within the network of controllers,

Optionally, the communication system may comprise a network of internal communication links having one or more internal communication links between the controllers. For example, the internal communication link between the controllers may be part of the network of internal communication links.

The network of communication channels can provide a reliable, secured and, high throughput communication between the towing vehicle and the network of controllers on the trailer. Likewise, the network of internal communication links can also provide a reliable, secured and, high throughput communication between the network of controllers on the trailer.

Optionally, the network of controllers can be adapted to identify a defect in any of the controllers based on the information that is exchanged via the network of internal communication links and/or the network of communication channels, and to disable the controller with the defect.

The defect can be for example a malfunction, a situation requiring service of the loads or other components of the communication system, the lack of responsiveness of the communication system, or any other deviation from normal operation of the communication system and the components of the system.

The network of controllers may be further configured to select from the network of controllers a controller without defects and to designate the controller without defects as first controller (e.g. primary domain controller).

The network of controllers may be further configured to implement functions fulfilled by the controller with the defects on the first controller, which is the controller without defects.

The present invention further relates to a centralized trailer architecture having a communication system. Optionally, the centralized trailer architecture is part of a highly autonomous driving HAD trailer architecture.

The HAD trailer architecture may have at least two controllers. Each controller may have at least one independent power supply channels and at least one independent communication channel to the towing vehicle. Likewise, each controller may have at least one independent power supply terminal connectable to the towing vehicle.

The present invention relates further to a method for establishing communication between a towing vehicle and a trailer within a centralized trailer system architecture of a communication system.

The method comprising the following steps:
- controlling one or more loads of the trailer by a first controller and a second controller;
- providing a first communication line between the first controller and the towing vehicle via a first communication channel;
- providing a second communication line between the second controller and the towing vehicle via a second communication channel;
- connecting the first controller and the second controller with an internal communication link to exchange information with each other.

The first communication channel and the second communication channel are further configured to provide independent communication to the first controller and to the second controller from the towing vehicle.

This method may also be implemented in a computer-readable storage device having a software that is stored thereon. The computer-readable storage device is designed to carry out the method for establishing a communication between the towing vehicle and the trailer within the centralized trailer system architecture of a communication system, when the computer program is executed on a processor.

When compared to conventional communication systems, embodiments of the present invention provide the following advantages. The communication system would be suitable for a fault tolerant redundant trailer architecture. Moreover, the centralized trailer architecture has a first controller (e.g. primary domain controller) and one or more independent controllers that enables the trailer to operate safely.

Currently there is no communication system for a connection between a towing vehicle and a trailer that is able to gateway the messages from the towing vehicle to other domain controllers and vice versa if an individual component has a failure, and in the same time has a network of domain controllers interconnected by a network of communication channels.

Therefore, embodiments of the present invention can particularly be used for such towing vehicle-trailer communication system where highly autonomous driving trailer architecture is required.

Some examples of the communication system will be described in the following by way of examples only, and with respect to the accompanying figures, in which:
- Fig. 1: shows a communication system for a trailer according to an embodiment of the present invention;
- Fig. 2: shows a communication system for a trailer according to another embodiment of the present invention;
- Fig. 3: shows a communication system for a trailer with a network of controllers and a shared internal communication link according to another embodiment of the present invention;
- Fig. 4: shows a communication system for a trailer with a network of controllers and a pairwise independent internal communication link according to another embodiment of the present invention;
- Fig. 5: depicts schematically a flow diagram of a method for stablishing redundant communication between a towing vehicle and a trailer.

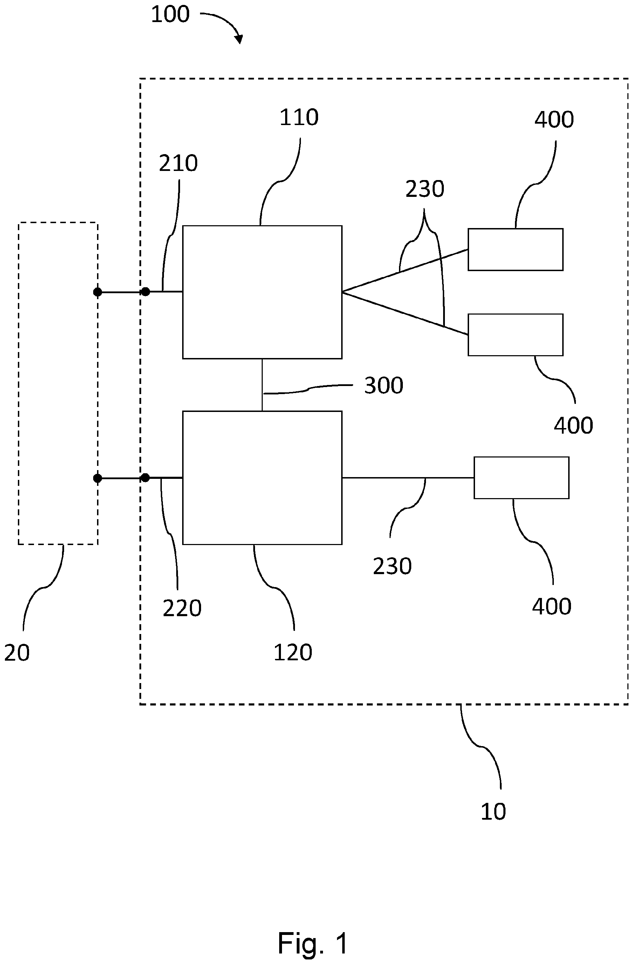

**Fig. 1** shows a communication system 100, which is suitable for a trailer 10 according to embodiments. The trailer 10 is configured to be towed by a towing vehicle 20.

The communication system 100 comprises a first communication channel 210 for providing a communication line between the first controller 110 and the towing vehicle 20. The communication system 100 further comprises a second communication channel 220 for providing a communication line between the second controller 120 and the towing vehicle 20.

It is understood that first communication channel 210 and the second communication channel 220 are configured to provide independent communication to the first controller 110 and to the second controller 120 from the towing vehicle 20.

The first controller 110 and the second controller 120 can be interchangeable, for example in case of malfunction of any of the controllers, the first controller 110 can be used instead of the second controller 120 and vice versa.

The one or more loads 400 of the trailer 10 can be controlled by the first controller 110. The one or more loads 400 of the trailer 10 can also be controlled by the second controller 120. It is understood that the load 400 is a device hosting a function.

An internal communication link 300 is located between the first controller 110 and the second controller 120 to exchange information with each other. The internal communication link 300 connects the first controller 110 and the second controller 120, and the first controller 110 and the second controller 120 can communicate with each other and exchange information over the internal communication link 300.

According to embodiments, the centralized trailer architecture with redundant communication system can have more than one internal communication links 300 between the controllers to exchange information with each other.

It is understood that the controllers 110, 120 are connected to an electronic control unit. The electronic control unit may be installed on the trailer 10, not necessarily on the towing vehicle 20, or in any other control or in a highly autonomous driving HAD unit present in the trailer 10. The electronic control unit handle the data received from the first controller 110 and/or the second controller 120.

For example, the first controller 110 can be located on the trailer 10 between the one or more loads 400 and the first communication channel 210. In addition, the first controller 110 can be connected to the one or more loads 400 via the communication line 230. Likewise, the second controller 120 can also be located on the trailer 10 between the one or more loads 400 and the second communication channel 220. In addition, the second controller 120 can be connected to the one or more loads 400 via the communication line 230.

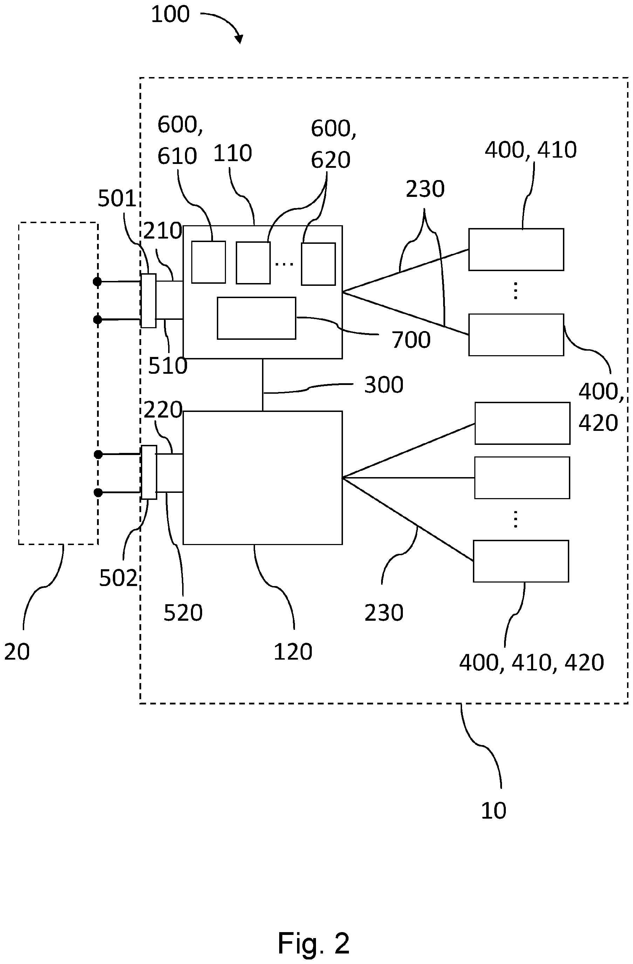

**Fig. 2** shows a communication system 100 for a trailer 10 according to another embodiment.

The first controller 110 can be configured as a primary domain controller and the second controller 120 can be configured as a redundant domain controller. The second controller 120 may serve as a duplicate for preventing failure of the communication system 100 upon failure of a single component, for example the first controller 110 or one or more loads 400.

The one or more loads 400 can include a safety critical 410 load to perform safety critical functions (e.g. brake control, levelling control) and non-safety critical loads 420 to perform non-safety critical functions (e.g. telematics, image processing, point cloud processing).

For example, the one or more loads 400 can be any of the following devices: an electronic brake control device, a levelling control device, a light control device, telematics device, or any other type of power consuming device of the trailer 10, other type of device to which power is delivered for example through the power supply lines 230.

The first controller 110 and the second controller 120 can be configured to control different safety critical load 410 and different loads from the non-safety critical loads 420, for example by providing at least one communication line 230 between the safety critical load 410 and the controllers and/or at least one communication line 230 between the non-safety critical loads 420 and the controllers.

In some embodiments, the communication line 230 can also include a power supply line. Therefore, the communication line 230 can be a power-line communication or power-line carrier to transmit data and simultaneously supply power between the controllers 110, 120 and the one or more loads 400. The power-line communication 230 may carry data on a conductor that is also used simultaneously for electric power transmission or electric power distribution to one or more loads 400.

The safety critical load 410 can have a defect, a single point error or failure (e.g. loss of connectivity to the controllers or to the power lines). In this situation, the safety critical load 410 with the defect can be separate from the other loads and from the controllers. Therefore, at least two independent communication lines 210, 220, and at least two separate controllers 110,120 may be implemented in the communication system 100 to provide a fail-safe communication between a towing vehicle 20 and a trailer 10.

The communication system 100 may comprises a first power supply channel 510 for supplying power to the first controller 110 from the towing vehicle 20 via a first power supply terminal 501, and a second power supply channel 520 for supplying power to the second controller 120 from the towing vehicle 20 via a second power supply terminal 502.

The power supply channels 510, 520 and the power supply terminals 501, 502 may be located on the trailer 10 and may be adapted to independently supply the controllers with power, for example from the towing vehicle 20. The power supply channels 510, 520 may also be adapted to supply one or more loads 400 (e.g. terminal devices) with power through the controllers.

For example, the controllers may be independently provided with power from the towing vehicle 20 through the power supply channels 510, 520. For example, the power supply channels may be independent of each another, the power supply channels may not be connected to each other, the second power supply channel may not influence the first power supply channel, and the first power supply channel may be not subject to be control by the second power supply channel and vice versa. In addition, if one power supply channel fails the other power supply channel remain intact. The same applies to any two power supply channels when there are more than two power supply channels. For example, in the situation when one of the power supply channel fails, the other power supply channel remains intact.

The first controller 110 and/or the second controller 120 may be configured to detect defects in the first controller 110 and/or in the second controller 120.

It is understood that there can be more than two power supply channels and more than two power supply terminals. Therefore, the first power supply channel 510 can be configured as a primary power supply channel and the second power supply channel 520 can be configured as one of the redundant power supply channels.

The redundant supply channel 520 may serve as a duplicate for preventing failure of the communication system 100 upon failure of a single component, for example the primary power supply channel 510. The power supply terminals may provide an independent power supply from the towing vehicle 20 and from axle-driven generators to the trailer 10.

It is understood that the power supply terminals 501, 502 are located on the trailer 10. For example, the power supply terminals 501, 502 can be one plug or separate plugs, and the one plug or separate plugs can be safely plugged into one socket or separate sockets, for example to the socket or to separate sockets located on the towing vehicle 20.

The first power supply channel 510 and the second power supply channel 520 may provide power from the power network of the towing vehicle 20 for purposes of powering the one or more loads 400 through the power supply lines 230.

The communication system 100 may further comprises one or more hardware accelerators 600 adapted to accelerate the processing speed of the first controller 110 and/or the second controller 120.

The one or more hardware accelerators 600 include a high-level information processing accelerator 610 and low-level information processing accelerators 620 to accelerate the first controller 110 and/or the second controller 120 at a different level. The first controller 110 may processes the exchanged information faster than the second controller 120.

The hardware accelerators 600 may be connected to the first controller 110 or can be integrated into in the first controller 110. The hardware accelerators 600 may also be connected to or integrated into the second controllers 120.

The information that is exchanged via the internal communication link 300 with one or more hardware accelerators 600, 610, 620 can be image data and/or point cloud data. The one or more hardware accelerators 600 can be configured to process image data and/or point cloud data, for example image signal processor ISP, graphics processing unit GPU, neural network NN accelerator, digital signal processor DSP, or any other accelerator.

The first controller 110 may have an advanced hardware with hardware acceleration capabilities for image and point cloud processing algorithms. This can be an ISP, a GPU, a DSP, and an NN-accelerator among others. Typically, but not exclusively sensors with low-level data output can be connected to the first controller 110. The second controllers (e.g. redundant domain controllers) 120 may process high-level preprocessed data coming from smart sensors.

The communication system 100 may further include a gateway 700 connected to the first controller 110 and/or to the second controller 120, adapted to exchange information between the towing vehicle 20 and the first controller 110 and/or the second controller 120.

The communication system 100 may also include a gateway 700. The gateway 700 can be a communications gateway adapted to enable communication between the towing vehicle 20 and the first controller 110 and/or the second controller 120. The gateway 700 can be connected to the first controller 110 or can be integrated into the first controller 110. The gateway 700 can also be connected to or integrated into the second controllers 120.

The gateway 700 may be configured to prioritize communications related to one or more loads 400, including communications related to the status of the safety critical load 410.

In case of a communication link error occur between one of the independent controllers (e.g. domain controller 110, 120) and the towing vehicle 20, the gateway 700 forwards the information from the towing vehicle 20 to the corresponding independent controller 110, 120 and vice versa.

The information that is exchanged via the internal communication 300 link may include at least one of the following:
- status information about the first controller 110 and/or the second controller 120;
- status information about the first communication channel 210 and/or the second communication channel 220;
- status information about the first power supply channel 510 and/or the second power supply channel 520;
- status information about the one or more loads 400;
- status information about the one or more hardware accelerators 600;
- status information about the gateway 700;
- other information.

For example, the information is indicative of an occurring defect in the operation of the communication system 100 to the first controller 110 or indicative of the correct operation of the communication system 100 to the first controller 110.

For example, the other information may include status information about the braking system, lighting system, navigation system, sensors, steering system, and other subsystems of the trailer 10 or the towing vehicle 20. The internal communication link 300 may also exchange information about different and multiple subsystems of the trailer 10.

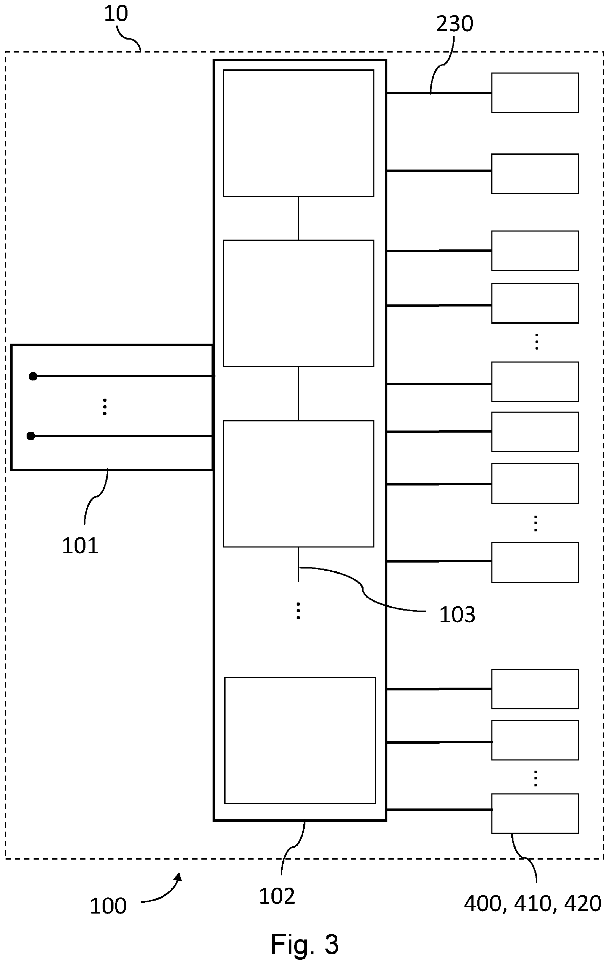

**Fig. 3** shows a communication system 100 for a trailer 10 with a network of controllers 102 and with a shared internal communication link 300 according to another embodiment.

The network of controllers 102 can be interconnected by the internal communication link 300. The first controller 110 and the second controller 120 can be any two controllers within the network of controllers 102 and the internal communication link 300 can be part of the network of communication channels 101 and the network of internal communication links 103. In other embodiments, the internal communication link 300 is not part of the network of communication channels 101.

The network of communication channels 101 can provide a reliable, secured, and high throughput communication between the towing vehicle 20 and the network of controllers 102.

The network of controllers 102 can be adapted to identify a defect in any of the controllers within the network of controllers 102, based on the information that is exchanged via the internal communication line 300, and to disable the controller with the defect within the network of controllers 102.

The communication system 100 can be part of a centralized trailer architecture. The centralized trailer architecture can be part of a highly autonomous driving HAD trailer architecture.

Therefore, the communication system 100, based on the information exchanged via the internal communication link 300, which is part of the network of internal communication links 103, may provide a fail-safe braking, a fail-safe steering, a fail-safe power supply systems and a fail-safe communication for a towing vehicle-trailer system.

In this way, the communication system 100 of the centralized trailer architecture may have minimal risk maneuvers that ensure the towing vehicle-trailer combination can safely stop and park at any time and enable towing vehicle-trailer combination to continue driving reliably even if a fault occurs in a safety-related communication system 100 (e.g. the first controller 110 fails, the safety critical load 410 fails, etc.).

The centralized trailer architecture for autonomous driving with the communication system 100 as disclosed in the embodiments may comprise a redundant fail-safe braking system, a redundant fail-safe steering system, a fail-safe truck motion controller, and a redundant fail-safe power management system.

For example, the fail-safe redundant steering systems may include an all-electric electric power steering system and an electrohydraulic redundant advanced hybrid power steering system. Both steering systems may be suitable for the Highly Autonomous Driving of both electric and conventional vehicles having the communication system 100 as disclosed in the embodiments.

For example, the fail-safe truck motion controller may connect and coordinate all the actuators actively involved in vehicle dynamics (e.g. braking, steering, drive units), and may represent an interface between the actuation level and the virtual driver.

For example, the fail-safe power management system may provide a highly available electrical power supply for safety-related functions (e.g. safety-critical loads 410) such as brakes and steering, but also the HAD electronic control unit (ECU; control unit with virtual driver) having the communication system 100 as disclosed in the embodiments.

Therefore, the HAD trailer architecture may have at least two first controllers 110 (e.g. central or domain) within the network of controllers 102. Each first controller 110 has an independent power supply channel and an independent communication channel to the towing vehicle 20.

In other embodiments, each first controller 110 has two or more independent power supply terminals (501, 502 ...) and two or more independent communication channels (210, 220 ...) to the towing vehicle 20.

It is understood that the independent communication channel is part of the network of communication channels 101, and the independent power supply channel is part of a network of power supply channels.

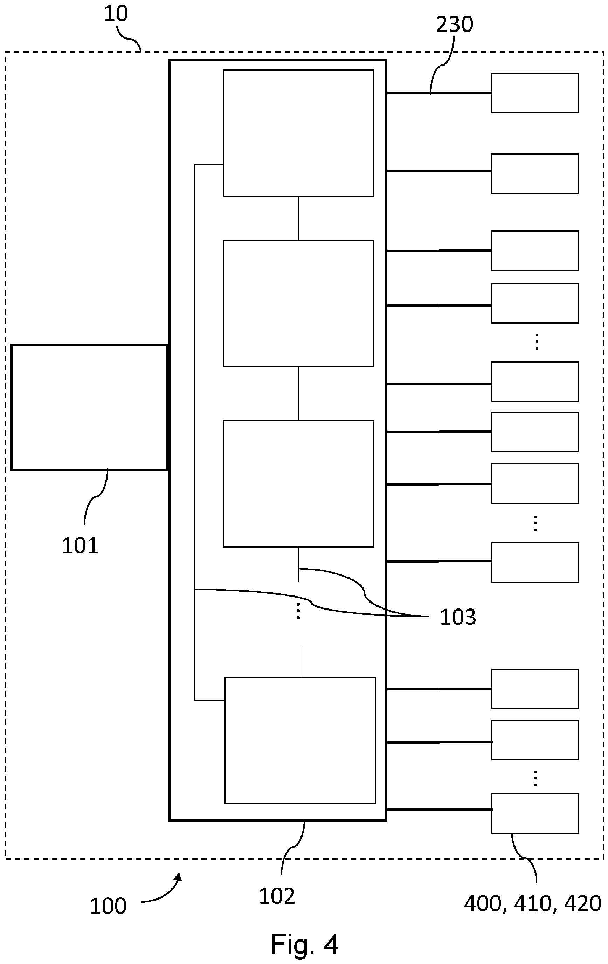

**Fig. 4** shows a communication system 100 for a trailer 10 with a network of controllers 102 and a pairwise independent internal communication lines 300 according to another embodiment.

For example, at least two controllers within the network of controllers 102 may be pairwise independent. Therefore, the at least two controllers within the network of controllers 102 may have at least two internal communication links 300 within the network of internal communication lines 103.

For example, at the same time, one controller within the network of controllers 102 may be connected to another two other controllers within the network of controllers 102 by at least two individual internal communication links 300 within the network of internal communication lines 103.

Therefore, the internal communication links 300 within the network of internal communication lines 103 may occur in pairs, and an individual controller within the network of controllers 102 is connected to at least two other controllers within the network of controllers 102.

In addition, the network of communication channels 101 may be configured to enable the communication between the towing vehicle 20 and the trailer 10. Likewise, the network of power supply channels may be configured to supply power between the towing vehicle 20 and the trailer 10.

It is understood that the first controller 110 and the second controller 120 can be any two controllers within the network of controllers 102. The first communication channel 210 and the second communication channel 220 can be any two communication channels within the network of communication channels 101. The internal communication link 300 between the controllers can be part of the network of internal communication lines 103.

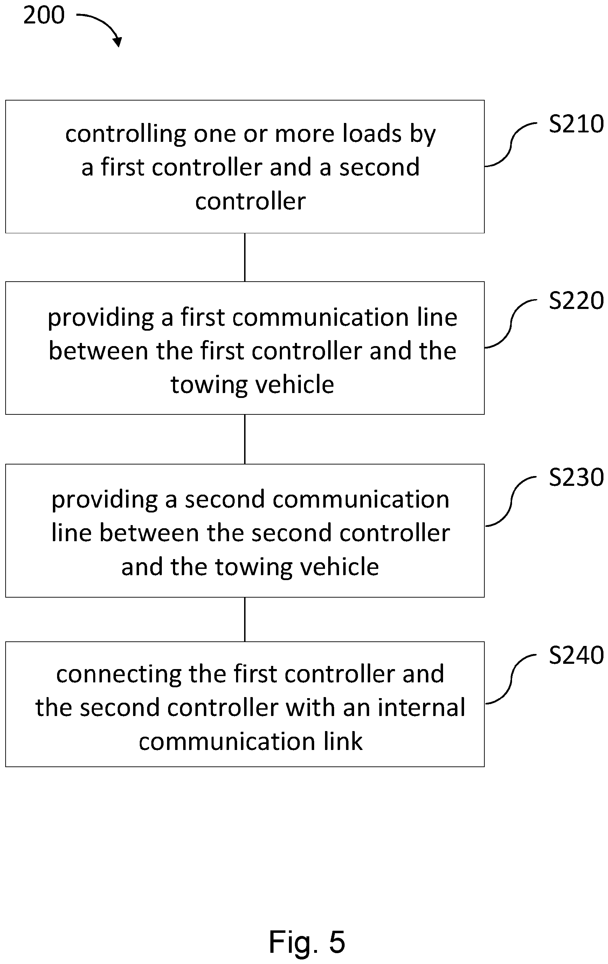

**Fig. 5** depicts schematically a flow diagram of a method 200 for stablishing communication between a towing vehicle 20 and a trailer 10 within a centralized trailer system architecture with a communication system 100. The method 200 comprises the steps of:
- controlling S210 one or more loads 400 of the trailer 10 by a first controller 110 and a second controller 120;
- providing S220 a first communication line between the first controller 110 and the towing vehicle 20 via a first communication channel 210;
- providing S230 a second communication line between the second controller 120 and the towing vehicle 20 via a second communication channel 220;
- connecting S240 the first controller 110 and the second controller 120 with an internal communication link 300 to exchange information with each other.

The method 200 may further comprise that the first communication channel 210 and the second communication channel 220 are configured to provide independent communication to the first controller 110 and to the second controller 120 from the towing vehicle 20.

The method 200 may also be a computer-implemented method. A person of skill in the art would readily recognize that steps of various above-described methods may be performed by programmed computers.

Embodiments are also intended to cover program storage devices, e.g., digital data storage media, which are machine or computer-readable and encode machine-executable or computer-executable programs of instructions, wherein the instructions perform some or all of the acts of the above-described method 200 when executed on the computer or processor.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### LIST OF REFERENCE SIGNS

- 10: trailer
- 20: towing vehicle
- 100: communication system
- 101: network of communication channels
- 102: network of controllers
- 103: network of internal communication links
- 110: first controller
- 120: second controller
- 210: first communication channel
- 220: second communication channel
- 230: communication line and/or power supply line
- 300: internal communication link
- 400: one or more loads
- 410: safety critical load
- 420: non-safety critical loads
- 501: first power supply terminal
- 502: second power supply terminal
- 510: first power supply channel
- 520: second power supply channel
- 600: one or more hardware accelerators
- 610: high-level information processing accelerator
- 620: low-level information processing accelerator
- 700: gateway

## Claims

1. A communication system for a trailer (10), the trailer (10) being configured to be towed by a towing vehicle (20),
**characterized by**
- a first controller (110) and a second controller (120) for controlling one or more loads (400) of the trailer (10);
- a first communication channel (210) for providing a communication line between the first controller (110) and the towing vehicle (20);
- a second communication channel (220) for providing a communication line between the second controller (120) and the towing vehicle (20); and
- an internal communication link (300) connecting the first controller (110) and the second controller (120) to exchange information with each other,
wherein the first communication channel (210) and the second communication channel (220) are configured to provide independent communication to the first controller (110) and to the second controller (120) from the towing vehicle (20).

2. The communication system according to claim 1, wherein the one or more loads (400) include a safety critical load (410) to perform safety critical functions and non-safety critical loads (420) to perform non-safety critical functions,
**characterized in that**
the first controller (110) and the second controller (120) are configured to control the safety critical load (410) and different loads from the non-safety critical loads (420).

3. The communication system according to claim 1 and claim 2,
**characterized by** further comprising at least one of the following:
- one or more hardware accelerators (600) adapted to accelerate the processing speed of the first controller (110) and/or the second controller (120); and
- a gateway (700) connected to the first controller (110) and/or to the second controller (120), adapted to exchange information between the towing vehicle (20) and the first controller (110) and/or the second controller (120),
wherein the one or more hardware accelerators (600) and/or the gateway (700) is included in the first controller (110).

4. The communication system according to claims 1 to 3,
**characterized in that**
the information that is exchanged via the internal communication link (300) includes at least one of the following:
- status information about the first controller (110) and/or the second controller (120);
- status information about the first communication channel (210) and/or the second communication channel (220);
- status information about the one or more loads (400);
- status information about the one or more hardware accelerators (600);
- status information about the gateway (700);
- other information;
wherein the information is indicative of an occurring defect in the operation of the communication system to the first controller (110) or indicative of the correct operation of the communication system to the first controller (110).

5. The communication system according to claims 1 to 4, wherein the one or more hardware accelerator (600) include a high-level information processing accelerator and low-level information processing accelerators to accelerate the first controller (110) and/or the second controller (120) at a different level,
**characterized in that**
the first controller (110) and/or the second controller (120) are configured to operate with the same or different hardware accelerators (600) based on the information that is exchanged via the internal communication link (300).

6. The communication system according to claims 1 to 5,
**characterized in that**
the information that is exchanged via the internal communication link (300) with one or more hardware accelerators (600) are image data and/or point cloud data,
wherein the first controller (110) processes the exchanged information faster than the second controller (120).

7. The communication system according to claims 1 to 6,
**characterized in that**
the one or more hardware accelerators (600) are configured to process image data and/or point cloud data and include at least one of the following:
- an image signal processor (ISP);
- a graphics processing unit (GPU);
- a neural network (NN) accelerator;
- a digital signal processor (DSP).

8. The communication system according to claims 1 to 7,
**characterized in that**
the one or more loads (400) can be any of the following devices: an electronic brake control device, a levelling control device, a light control device, telematics device, or any other type of power consuming device of the trailer (10).

9. The communication system according to claim 1 to 8,
**characterized by** further comprising at least one of the following:
- a first power supply channel (510) for supplying power to the first controller (110) from the towing vehicle (20) via a first power supply terminal (501);
- a second power supply channel (520) for supplying power to the second controller (120) from the towing vehicle (20) via a second power supply terminal (502);
wherein the first power supply channel (510) and the second power supply channel (520) are configured to provide independent power supply to the first controller (110) and to the second controller (120) from the towing vehicle (20).

10. The communication system according to any one of the preceding claims,
**characterized by**
- a network of communication channels (101) configured to enable a communication between the towing vehicle (20) the trailer (10);
- a network of internal communication links (103) having one or more internal communication links (300) between the controllers; and
- a network of controllers (102) being interconnected by the network of internal communication links (103),
wherein the first communication channel (210) and the second communication channel (220) being any two communication channels within the network of communication channels (101),
wherein the first controller (110) and the second controller (120) being any two controllers within the network of controllers (102), and
wherein the internal communication link (300) between the controllers is part of the network of internal communication links (103).

11. The communication system according to claim 10,
**characterized in that**
the network of controllers (102) is adapted to identify a defect in any of the controllers based on the information that is exchanged via the network of internal communication links (103) and/or the network of communication channels (101), and to disable the controller with the defect.

12. A centralized trailer architecture
**characterized by**
a communication system according to one of the preceding claims.

13. The centralized trailer architecture according to claim 12,
**characterized in that**
the communication system is part of a highly autonomous driving (HAD) trailer architecture.

14. A method for establishing communication between a towing vehicle (20) and a trailer (10) within a centralized trailer system architecture of a communication system,
**characterized by**
- controlling one or more loads (400) of the trailer (10) by a first controller (110) and a second controller (120);
- providing a first communication line between the first controller (110) and the towing vehicle (20) via a first communication channel (210);
- providing a second communication line between the second controller (120) and the towing vehicle (20) via a second communication channel (220);
- connecting the first controller (110) and the second controller (120) with aninternal communication link (300) to exchange information with each other;
wherein the first communication channel (210) and the second communication channel (220) are configured to provide independent communication to the first controller (110) and to the second controller (120) from the towing vehicle (20).

15. A computer-readable storage device having a software that is stored thereon and is designed to carry out the method for establishing a communication between the towing vehicle (20) and the trailer (10) within the centralized trailer system architecture of a communication system (100) as claimed in claim 13, when the computer program is executed on a processor.
